Europäisches Patentamt

**European Patent Office**

**Office européen des brevets**

(19)

(11) Publication number: **0 114 448**
A1

(12)

# EUROPEAN PATENT APPLICATION

(21) Application number: **83300282.7**

(22) Date of filing: **20.01.83**

(51) Int. Cl.³: **C 04 B 21/00**
**E 21 F 15/08**

(43) Date of publication of application:
**01.08.84  Bulletin  84/31**

(84) Designated Contracting States:
**AT BE CH DE FR IT LI LU NL SE**

(71) Applicant: **Tilcon Limited**
**Conyngham Hall Knaresborough**
**North Yorkshire HG5 9AY(GB)**

(72) Inventor: **Doemling, Vincent Anthony Dominic**
**19 Hambleton Terrace**
**Knaresborough North Yorkshire(GB)**

(74) Representative: **Jones, Andree Zena et al,**
**E. N. Lewis & Taylor 144 New Walk**
**Leicester LE1 7JA(GB)**

(54) Improvements in or relating to settable foamed compositions.

(57) The invention relates to the production of a foamed cementitious mouldable material capable of use in the filling of for example disused mining cavities. The material comprises a foamed mixture of an expanded material such as perlite or vermiculite, with cement and water to produce a settable thixotropic material. A batch process and a continuous process are described.

Title:   Improvements in or relating to settable foamed

compositions

The invention is concerned with improvements in or relating to settable foamed compositions, particularly to compositions which are initially readily mouldable to fill or partly fill a cavity.

The invention provides a method of producing a foamed, cementitious, mouldable material provided with thixotropic characteristics by the inclusion therein of an expanded material selected from the group of inorganic materials including perlite, vermiculite and the like as hereinafter defined.

The invention further provides a method of producing a settable foamed composition suitable for use in filling cavities comprising the steps of providing a mixture of cement and an expanded material selected from the group of inorganic mineral materials including perlite, vermiculite and the like, adding water thereto to render the mixture thoroughly and evenly dampened, adding water to a natural or synthetic surfactant to produce a foam and introducing the foam into the dampened mixture by a non-vigorous mixing action to produce a thixotropic cementitious foamed material which is impelled into a cavity at least partially to fill it.

The invention yet further provides a method of producing a settable foamed composition suitable for use in filling cavities comprising the steps of providing a slurry of cement and water, adding water to a natural or synthetic surfactant to produce a foam, introducing the foam into the slurry of cement and water to produce a flowable, non-thixotropic, cementitious, foamed material and introducing into the said cementitious foamed material, by a non-vigorous mixing action, an expanded material selected from the group of inorganic mineral materials including perlite, vermiculite and the like, to produce a thixotropic cementitious foamed material which is impelled into a cavity, at least partially to fill it.

The invention still further provides a settable composition for use when rendered into a foamed condition for filling cavities, comprising cement, an expanded material selected from a group of inorganic materials including perlite, vermiculite and the like as hereinafter defined, a natural or synthetic surfactant and water. Conveniently, the cement may be any Portland cement, including the sulphate resistant variety, or a high alumina cement. Advantageously, the composition may include gypsum. This may be in the form of an anhydrous gypsum plaster, or the hemihydrate of dihydrate form as desired.

It will further be found convenient where relatively quick setting  properties are required to include an accelerator.  Suitable accelerators may include sodium carbonate or calcium chloride.

The surfactant selected may be any suitable surfactant, for example a blend of sodium lauryl sulphate and sodium lauryl ether sulphate in a butyl diethoxitol solvent has been found suitable.

While perlite and vermiculite are examples of readily available material from the group referred to, it is to be understood that the definition of the group is wide enough in scope to include such materials as for example hollow glass microsphere or pulverised fly ash floaters. Moreover, while such materials may conveniently be rendered into an expanded condition by heat treatment, it is possible to attain similar results by chemical means if desired, and the term "expanded" is to be read to include products of whatever kind of treatment is involved.

Suitable ranges of amounts of components of a composition according to the invention may be as follows:-

|  | Parts by weight | | |
| --- | --- | --- | --- |
| Cement | 20 | - | 100 |
| Gypsum | 0 | - | 70 |
| Expanded material | 5 | - | 30 |
| Surfactant | 0.1 | - | 10 |

Water (including that present

in foamed surfactant and

amount added to dry

| | | |
|---|---|---|
| ingredients | 20 - | 520 |
| Accelerator | 0.01 - | 10 |

Preferred ranges may be:-

| | Parts by weight | | |
|---|---|---|---|
| Cement | 50 | - | 60 |
| Gypsum | 15 | - | 60 |
| Expanded material | 15 | - | 25 |
| Surfactant | 0.5 | - | 5 |
| Water (total) | 75 | - | 285 |
| Accelerator | 0.1 | - | 5 |

Settable compositions in accordance with the invention may be used for a variety of purposes, for example in the in-filling of cavities in mining industry, as explained in more detail below, for fire-inhibiting purposes, and for the production of moulded lightweight, sound and heat-insulating components for the building industry. In the latter case, where for example it is desired to fabricate building panels, it may be advantageous to increase the flexural and impact strength of the moulded panel by the addition of fibre reinforcement to the cement/gypsum admixture with for example perlite or vermiculite, which may conveniently be alkali-resistant chopped glass fibres. The fibres may form up to 10% of the dry ingredients. Steel reinforcement may be provided if required irrespective of the presence of fibre reinforcement.

Alternatively, the composition may be used to fill the cavities of hollow concrete building blocks or the like.

Where, however, the cavity to be filled is a cavity formed in connection with a mining operation, the properties most often required are to prevent undesired movement of rocks and fragmented debris which would otherwise present possible hazards. For example, where a cavity exists near an operational coal face, falling rocks in the cavity may land with sufficient impact to cause rock movement at the coal-face or in the adjoining roadways. Thus in these circumstances, it is desirable to hinder the fall of rocks, using the compositions according to the present invention as an impact-absorbing or "cushioning" means.

It will be found that the use of compositions according to the invention results in numerous advantages. It has already been proposed to use cementitious materials which may be pumped by means of ultra-high pressure pumps to fill mining cavities, but in order to permit pumping these materials must be in slurry form. However, although these are quick-setting, considerable problems are encountered due to the fluidity of the mix, and complicated shuttering procedures are necessary.

Similarly, use of ordinary cementitious foams is impracticable because they are too fluid. Attempts have been made to use synthetic foams, for example ureaformaldehyde, but in confined situations, as in underground mining, the emission of formaldehyde fumes is unpleasant, and in the event of combustion in low-oxygen conditions, it is possible for hydrogen cyanide gas to be evolved.

It should be noted that settable compositions according to the invention are completely incombustible and inert. Therefore, they are also of particularly advantageous use as fire-retardant compositions, and may be injected into wall cavities or floor cavities to act as a fire-inhibiting barrier.

It will frequently be desirable that the materials necessary for the realisation of the invention should be brought to the site in as compact a form as possible, since the volumes to be filled under-ground may be large. If the volume of materials to be brought to the site is not appreciably less than that of the cavity to be filled, considerable transport problems could be involved. It will thus be appreciated that an advantage of the increase in volume brought about by foaming is reaped in reducing the volume of material required to be transported.

However, this advantage may be taken a stage further.

The invention still further provides a method as described in the third paragraph of this specification, comprising the preliminary step of procuring unexpanded mineral material and subjecting it in situ to treatment, to render it into expanded form immediately prior to mixing it with the cement.

Thus, where long distance transport of materials is required, a surprising degree of compactness may be achieved in the material as supplied to the site, compared with the volume eventually filled by the foamed components in accordance with the invention.

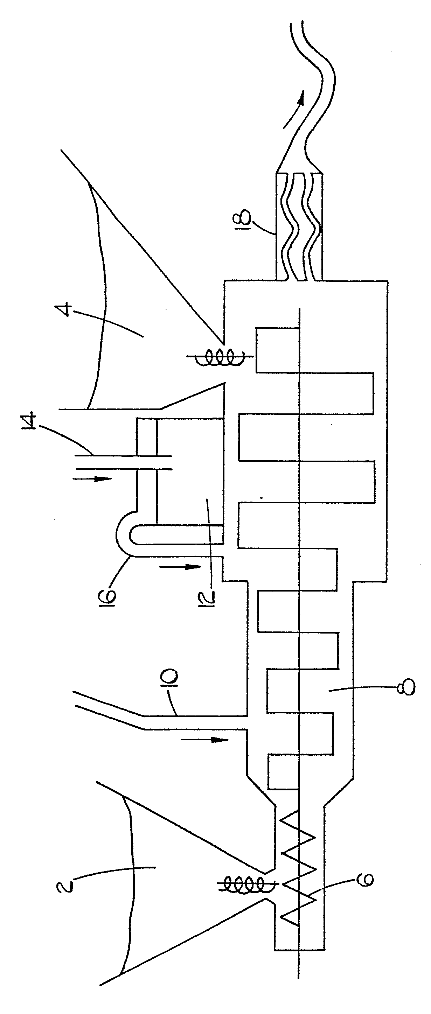

There will now be described examples of a method and of a composition according to the invention. It will be understood that the description , which includes reference to the drawing illustrating apparatus suitable for use with the method, is given by way of example only and not by way of limitation.

Example 1

In an operation to in-fill an underground cavity, a batch of settable composition included the following constituents:-

|  | Weight (kg) |
|---|---|
| Portland Cement | 550 |
| Hemihydrate gypsum plaster | 180 |
| Expanded perlite | 230 |
| Water | 300 |
| Surfactant/Water | 512 |
| Sodium Carbonate | 30 |

The surfactant used was sodium lauryl sulphate and sodium lauryl ether sulphate in a butyl diethoxitol solvent.

The foam was produced by diluting the surfactant with water to a solution of approximately 2% which was then subjected to the action of compressed air to cause initial foaming. The foam was then propelled by the air through a conventional fracturing column to a nozzle. The foam emerging from the nozzle was observed to be light and satisfactorily stable.

The cement, gypsum and the expanded perlite having been previously mixed together with 30.00 kg of sodium carbonate accelerator, the dry ingredients were emptied into a tumble mixer and water was then added and mixed in a sufficient quantity to produce a homogeneous mix, dampened to an extent giving a so-called "earth-dry" mix, that is, no free liquid in a readily friable mixture. Care was taken in mixing to ensure that the perlite appeared to be uniformly coated with cement and gypsum.

The foam was then added to the dampened mixture and the mixer operation continued.

It has been found that the action of a tumble mixer is particularly suitable for this purpose, since its gentle "folding" action is especially suitable in the avoidance of damage to the foam as the solid material is distributed therethrough.

The foamed mixture was then transferred to the hopper of a low pressure pump of the type known as worm- or screw-pumps. It will be understood that the type of pump selected must be a low-pressure pump to avoid damage to the foam.

The material was then pumped along a hose approximately 5 cm in diameter to emerge in the underground cavity. The material emerged as a lightweight, thixotropic paste, which showed minimal tendency to flow once placed, and therefore required little or no use of shuttering.

It will be appreciated that the combination of cement and gypsum normally ensures a fairly rapid "set", for example within five minutes of the addition of water.

However, because of the present of large amounts of air in the foam the material remains workable in the pump and is soft for up to 3 hours when placed unless an accelerator is present.

In the present example, the mixture hardened within one hour.

The hardened material was observed to possess sufficient strength to support loose rocks which fell from the cailing of the cavity from a height above that of the foam in-fill.

In the above example, the increase in volume after foaming and mixing had taken place was in the region of 70%. In many circumstances it is desirable to obtain a larger volume increase over the dry ingredients, and in addition, when large cavities are to be filled (as in the example) a repeating batch process is necessary because such tumble mixers as described are commonly only available with relatively small capacities.

In another example of the invention, therefore, a continuous screw mixer was utilised and in this way a higher volume expansion factor is obtained.

Example 2

The drawing illustrates diagrammatically mixing and placing equipment suitable for use to fill an underground cavity in a mine, that has been estimated at 100 $m^3$. The operation must be completed and the face advanced in 24 hours and therefore the faster operation of the continuous process is advantageous.

The following constituents are required:

|  | Weight (kg) |
|---|---|
| Portland cement | 5800 |
| Hemihydrated gypsum plaster | 5800 |
| Expanded perlite | 2000 |
| Surfactant | 100 |
| Accelerator | 12 |
| Water | 12000 |

The cement, gypsum and accelerator (sodium carbonate) are available pre-mixed in the correct proportions in 25 kg sacks. The perlite is obtained in convenient sized (100 litre) sacks contained 5 kg of material. Water is available on tap and the surfactant, which is the same as was used in Example 1, is supplied in 25 litre metal cans.

The cement/gypsum/accelerator mix is supplied to a hopper 2 and perlite is supplied to a hopper 4. Both these hoppers are maintained in a full condition.

Materials from the hopper 2 is fed by means of a rotary feed means 6 at a rate of 9.7 kg per minute into a mixing chamber 8 where they are formed into a slurry with water fed from a supply pipe 10 at a rate of 6.7 litres per minute.

A foaming solution is formed in a tank 12 from the surfactant  and water and subjected to the effects of compressed air (3 bar) supplied through a pipe 14 at a rate of 67 litres/minute.  Foam is generated at the same rate (67 litres foam $\cong$ 3.35 kg) and enters the mixing chamber 8 through a pipe 16.

Perlite is fed into the mixer 8 at a rate of 1.67 kg per minute and is blended with the other ingredients.

Finally the mix is pumped away through a worm-pump 18 at a rate of 5 $m^3$ per hour.  The wet density of this material material is some 257 $kg/m^3$.

The mixture in this example had hardened sufficiently within one hour to enable it to support a load of 0.1 $N/mm^2$. The final set-and-dried density of the material is in the region of 200 $kg/m^3$ with a compressive strength around 1.0 $N/mm^2$.

The final foamed material may conveniently have a density of approximately 200 kg/m$^3$, but it will be appreciated that by using increased amounts of foam or selecting a denser expanded perlite, densities ranging between, say, 130-350 kg/m$^3$ may be achieved.

In the Example II, a grade range of expanded perlite was used which, it has been noted, gives a very satisfactory product from the point of view of its thixotropic characteristics.  This grade range may be generally described as reasonably fine, for example giving the following grading figures when passed through a series of sieve sizes as detailed below:-

| Sieve size (Microns) | % by weight perlite retained |
|---|---|
| 1200 | 0 - 5 |
| 600 | 5 - 20 |
| 300 | 25 - 45 |
| 150 | 15 - 35 |

A typical sample of perlite in the above ranges may have an average volume of between 20 and 25  m$^3$/tonne or a little lower.

Other grades may be selected as required, but a somewhat more fluid product may be expected to result from the inclusion, say, of a grade of expanded perlite in which appreciably more than about 15-25% by weight is retained by a 1200 micron sieve. At the other end of the possible range, the selection of a grade appreciably finer or less dense than that mentioned above may be found to result in a much stiffer product. Thus the thixotropic characteristics of the product may be carefully selected if so desired.

In certain circumstances it may be desirable to enhance the permanence of a readily-accessible surface of an in-filled area to seal hardened foamed material formed in accordance with the present invention with a bonding composition such as is conventionally used to seal, for example, loose or unstable surfaces. A suitable bonding composition may comprise a dense cement/ aggregate mix applied by conventional means.

Various modifications may be made within the scope of the invention as defined in the following claims.

CLAIMS:-

1. A method of producing a foamed, cementitious, mouldable material provided with thixotropic characteristics by the inclusion therein of an expanded material selected from the group of inorganic materials including perlite, vermiculite and the like as hereinbefore defined.

2. A method of producing a settable foamed composition suitable for use in filling cavities from a mixture including cement, a foaming agent, water and an expanded material selected from the group of inorganic materials including perlite, vermiculite and the like as hereinbefore defined, to produce a thixotropic cementitous foamed material which is impelled into a cavity at least partially to fill it.

3. A method as claimed in claim 2 comprising the steps of providing a mixture of cement and an expanded material selected from said group of inorganic mineral materials adding water thereto to render the mixture thoroughly and evenly dampened, adding water to a natural or synthetic surfactant to produce a foam and introducing the foam into the dampened mixture by a non-vigorous mixing action to produce a thixotropic cementitious foamed material.

4. A method as claimed in claim 2 comprising the steps of providing a slurry of cement and water, adding water to a natural or synthetic surfactant to produce a foam, introducing the foam into the slurry of cement and water to produce a flowable, non-thixotropic, cementitious, foamed material and introducing into the said cementitious foamed material, by a non-vigorous mixing action, an expanded material selected from said group of inorganic mineral materials to produce a thixotropic cementitious foamed material.

5. A method as claimed in any one of the preceding claims wherein the setting time of the thixotropic material is shortened by the inclusion of an accelerator.

6. A method as claimed in any one of the preceding claims comprising the preliminary step of procuring the inorganic material in unexpanded form, and subjecting it in situ to treatment to render it into expanded form.

7. A method of filling or partially filling a non-water tight drainable cavity formed in a building construction or other structural edifice or excavation, comprising the steps of pumping into said cavity a thixotropic foamed cementitious material including an expanded material selected from the group of inorganic materials which include Perlite, vermiculite and the like as hereinbefore defined.

8. A settable composition for use, when rendered into a foamed thixotropic condition, for filling cavities, comprising cement, an expanded material selected from a group of inorganic materials including perlite, vermiculite and the like as hereinbefore defined, a natural or synthetic surfactant and water.

9. A composition as claimed in claim 8 wherein the cement is a Portland cement.

10. A composition as claimed in either one of claims 8 and 9 wherein there is present gypsum.

11. A composition as claimed in any one of claims 8 to 10 wherein there is present an accelerator.

12. A composition as claimed in claim 11 wherein the acelerator is sodium carbonate.

13. A composition as claimed in claim 11 wherein the accelerator is calcium chloride.

14. A composition as claimed in claim 8 wherein the surfactant is a mixture of sodium lauryl sulphate and sodium lauryl ether sulphate in a butyl diethoxitol solvent.

## European Patent Office

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-2 027 200 (J. CIPIN et al.)<br>* Claims 1,4,5,7,12; page 2, lines 24-29,34-37; page 3, lines 1-4 * | 1,2,7, 8,9,10 | C 04 B 21/00<br>E 21 F 15/08 |
| Y | US-A-4 042 745 (CH.E. CORNWELL et al.)<br>* Column 2, lines 40-47 * | 1,2,7, 8 | |
| Y | DE-A-2 221 678 (YTONG AG)<br><br>* Claims 1,8 * | 1,2,7, 8 | |
| Y | DE-A-2 650 045 (ANNELIESE ZEMENTWERKE AG)<br><br>* Claim 1; page 14, last paragraph * | 1,2,7, 8,11-13 | |
| Y | US-A-4 059 963 (W.R. WAYMENT)<br><br>* Claim 1; column 4, lines 23-32 * | 1,2,7, 8 | |
| Y | US-A-4 210 457 (V.H. DODSON et al.)<br>* Claims 15,17,18; column 7, lines 66-69; page 8, line 1; page 8, lines 26-29 * | 1,2,7, 8,9,14 | |

**TECHNICAL FIELDS SEARCHED (Int. Cl. ³)**

C 04 B 21/00
C 04 B 31/00
E 21 F 15/08

--- -/-

The present search report has been drawn up for all claims

| Place of search | Date of completion of the search | Examiner |
|---|---|---|
| THE HAGUE | 06-09-1983 | DAELEMAN P.C.A. |

**European Patent Office**

Page 2

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (Int. Cl. ³) |
| A | FR-A-2 191 570 (SOLETANCHE) ----- | | |
| | | | **TECHNICAL FIELDS SEARCHED (Int. Cl. ³)** |

The present search report has been drawn up for all claims

| Place of search THE HAGUE | Date of completion of the search 06-09-1983 | Examiner DAELEMAN P.C.A. |
|---|---|---|